# EUROPEAN PATENT SPECIFICATION

(11) **EP 2 002 460 B1**
(45) Date of publication and mention of the grant of the patent: **16.06.2010**
(21) Application number: 07759235.0
(22) Date of filing: 23.03.2007
(51) Int. Cl.: H01J 37/32, C23C 28/00, C23C 14/48, C23C 18/32, C25D 3/12, F16H 55/06

(54) **SURFACE TREATMENTS FOR SPIRAL BEVEL GEAR SETS**
OBERFLÄCHENBEHANDLUNGEN FÜR SPIRALFÖRMIGE UND ABGESCHRÄGTE GETRIEBEEINHEITEN
TRAITEMENTS DE SURFACE POUR ENSEMBLES ENGRENAGE SPIRO-CONIQUES

(30) Priority: 23.03.2006 US 785298 P
(43) Date of publication of application: 17.12.2008
(73) Proprietor: THE TIMKEN COMPANY, Canton, Ohio 44706 (US)
(72) Inventor: COOKE, Elizabeth P., Lyme, New Hampshire 03768 (US); EVANS, Ryan D., North Canton, Ohio 44720 (US); DOLL, Gary L., Canton, Ohio 44718 (US); KRUSE, Randy P., North Canton, Ohio 44720 (US); RIBAUDO, Carl R., Massillon, Ohio 44646 (US)
(74) Representative: Marles, Alan David
(86) International application number: PCT/US2007/064774
(87) International publication number: WO 2007/109784

(56) References cited:
- WO-A-2005/100810
- JP-A- 4 119 249
- JP-A- 10 019 092
- US-A- 4 095 003
- US-A- 5 404 060
- US-A1- 2002 174 741
- US-A1- 2005 061 251
- WANG S Y ET AL: "Enhancement of surface properties of 45<#> carbon steel using plasma immersion ion implantation" THIN SOLID FILMS, ELSEVIER-SEQUOIA S.A. LAUSANNE, CH, vol. 311, no. 1-2, 31 December 1997 (1997-12-31), pages 190-195, XP004121341 ISSN: 0040-6090
- TEETER F J ET AL: "WEAR PROTECTION FOR GEARS" GEAR TECHNOLOGY, RANDALL PUBLISHING CO. ELK GROVE, ILLINOIS, US, vol. 13, no. 2, 1 March 1996 (1996-03-01), pages 27-29, XP000550309 ISSN: 0743-6858
- ZHAOMING ZENG ET AL: "Plasma immersion ion implantation of industrial gears" SURFACE & COATINGS TECHNOLOGY ELSEVIER SWITZERLAND, vol. 186, no. 1-2, 2 August 2004 (2004-08-02), pages 260-264, XP002448812 ISSN: 0257-8972
- CONSTANTIN R.; MIREMAD B.: 'Performance of hard coatings, made by balanced and unbalanced magnetron sputtering, for decorative applications' SURFACE AND COATINGS TECHNOLOGY vol. 120-121, November 1999, ELSEVIER [CH], pages 728 - 733

## Description

### Background Of The Invention

This invention relates generally to surface treatments for gears, and, in particular, to corrosion and wear resistant surface treatments for gears (and especially spiral bevel gear sets).

Gear sets are commonly employed to transmit power. The gears of a gear set are often made from steel, which can be a hardened steel. The gear sets can be subject to physical conditions (oil-out conditions, grit, etc.) which adversely affect the operating life of the gear. Gear sets can also be subject to corrosive conditions, which again, can adversely affect the operating life of the gear.

The current state of the art in providing corrosion resistance to steel alloy components is to provide a thick (i.e., 20µm or greater) coating of Cr or Ni alloys. (Thinner coatings (i.e., <3 µm) of Cr or Ni alloys provide corrosion resistance in ASTM B117 salt spray for less than 24 hours.) This procedure works extremely well to provide corrosion resistance. However, the coating is so thick that it changes the dimensions of the component, thereby requiring a component redesign. Further, these thick coatings do not wear atomically under high loads and sliding speeds, but through fracture and delamination, making them unsuitable as wear resistant coatings.

The current state of the art in providing wear resistance to steel alloy components is to provide MC/aC:H (nanocrystalline metal carbide/amorphous hydrocarbon composite) or chromium nitride coatings. These coatings, however,
whether applied via PVD or CVD, have numerous pin holes extending through the coating to the substrate. The reason for pin hole formation during the deposition of the coating is not well understood, but pin holes are an inherent feature of PVD and CVD coatings on steel alloy substrates. The presence of the pin holes in the coating can lead to galvanic corrosion - which can accelerate the corrosion of the steel alloy substrate beyond its uncoated state.

US 5404060 discloses a worm gear assembly having an electroless nickel plating applied to the worm to maintain roughness. WO 2005/100810 is directed to the treatment of bearings to enhance their operating life in oil-out conditions and discloses subjecting a critical surface to ion-implantation to improve corrosion resistance and covering the ion-implanted critical surface with a nano-structured thin film coating.

US 2002/0174741 discloses plating a hard coating over a gear via an electroless plating process and then applying a DLC coating over the plated surface. Wang S.Y. et al, in "Enhancement of surface properties of 45<#> carbon steel using plasma immersion ion implementation" from THIN SOLID FILMS, ELSEVIER-SEQU01A S.A. LAUSANNE, CH, Vol. 311, no. 1 - 2, 31 December 1997 (1997-12-31), pages 190 - 195, XP004121341 ISSN: 0040 - 6090, discloses electroplating a hard chromium thin film on a surface and then enhancing the wear resistance of the film via nitrogen ion implantation.

According to a first aspect of the present invention there is provided a method for providing both wear protection and corrosion resistance to a gear having a metallic surface, the method comprising;
depositing a thin film wear protection layer on the surface; the wear protection layer being less than 3 micrometers and being deposited by a method that will leave cracks, and/or holes in the wear protection layer which can be penetrated by corrosive elements; and
depositing a corrosion resistant layer over the wear protection layer; the material of the corrosion resistant layer filling the cracks and/or holes in the wear protection layer to prevent corrosive elements from reaching the surface.

According to a second aspect of the present invention there is provided a gear having a metallic surface, the improvement comprising a wear layer on said gear surface and a corrosion resistant material; said wear layer being less than about 3 micrometers and having cracks and/or holes therein through which corrosive elements could pass; said corrosion resistant material filling the cracks and/or holes, the wear protective layer to substantially prevent corrosive materials from reaching the gear surface.

Preferred features of the invention are set out in the attached subclaims.

Briefly stated, this invention describes a duplex or dual-component coating which provides both wear resistance and corrosion resistance to steel alloy components, such as bevelled gears. The dual-component coating preferably comprises either (a) a thin (i.e., less than about 3 µm) layer ofNi or Ni alloy applied to the steel alloy substrate and a thin (i.e., less than about 3 µm) chromium nitride or MC/aC:H is applied on top of the Ni or Ni alloy coating; or (b) a thin (i.e., less than 3 µm) layer of chromium nitride or MC/aC:H applied to the steel alloy substrate and a thin (i.e., less than 3 µm) of Ni or Ni alloy is applied over the coating of chromium nitride of MC/aC:H. In one embodiment, the corrosion resistant layer is applied to the substrate and the wear layer is applied over the corrosion resistant layer. In another embodiment, the wear layer is applied to the substrate and the corrosion resistant layer is applied over the wear layer.

A method for treating a substrate (such as the gears of a gear set) to provide the substrate with both wear protection and corrosion resistance is disclosed. The method comprises providing the substrate with both a wear protection layer and a corrosion resistant layer. The wear protection layer can be applied to the gear and then the corrosion resistant layer can be applied over the wear resistant layer. Alternatively, the corrosion resistant layer can be applied to the gear and then the wear resistant layer can be formed over the corrosion resistant layer.

### Brief Description Of The Several Views Of The Drawings

FIG. 1 is a perspective view of a spiral bevel gear set;
FIG. 2 is a diagrammatic sketch of a dual-component wear resistant/corrosion resistant coating treatment of the present invention.
FIG. 3 includes photographs showing the effectiveness of the corrosion resistant layer; and
FIG. 4 includes photographs of a coupon coated with a wear resistant layer and an uncoated coupon to demonstrate the lack of corrosion resistance provided by the wear resistant layer.

Corresponding reference numerals will be used throughout the several figures of the drawings.

### Detailed Description Of The Invention

The following detailed description illustrates the invention by way of example and not by way of limitation. This description will clearly enable one skilled in the art to make and use the invention, and describes several embodiments, adaptations, variations, alternatives and uses of the invention, including what we presently believe is the best mode of carrying out the invention. Additionally, it is to be understood that the invention is not limited in its application to the details of construction and the arrangements of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

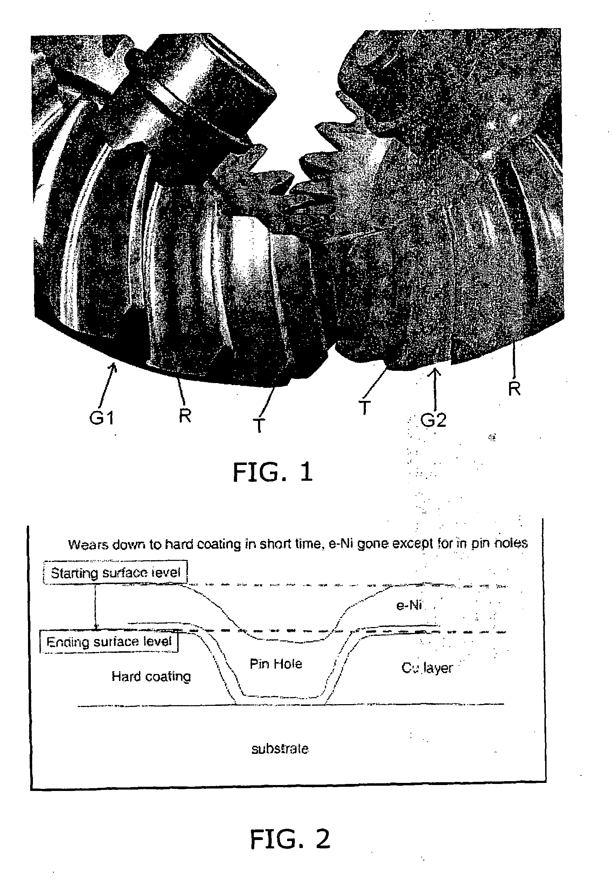

With reference to FIG. 1, a gear set, as is known, includes a pair of gears G1 and G2, each of which includes teeth T and roots R between the teeth. As is known, the teeth of the gear pair mesh with each other, such that a drive gear causes rotation of a driven gear. The gear set shown in FIG. 1 comprises a spiral bevel gear set. As seen, the top edges of the teeth are formed on a bevel (that is, in plan view the gear defines a trapezoid). Additionally, the teeth T are spiraled, rather than straight. Although the invention is shown for use on a spiral bevel gear set, it will be appreciated that the treatment process is applicable for other gears, and in fact, for other types of substrates (i.e., bearings, etc.)

To provide both wear protection and corrosion resistance to the gears, in one illustrative example, a wear layer can be formed on the gear and a corrosion resistant layer can then be formed over the wear layer to provide corrosion resistance.

The wear layer can, for example be (1) a composite coating containing nanocrystalline metal-carbides and an amorphous hydrocarbon matrix (i.e., MC/aC:H) (such as Timken's ES300 coating); (2) a two layered system comprised of an MC/aC:H and a non-metal containing (or metal-free) amorphous hydrocarbon (aC:H); (3) a two layered system comprised of a chromium nitride and an amorphous hydrocarbon (aC:H); (4) a single layer of aC:H that may also contain Si, (4) B₄C or B₄C and metals (such as Ti, W, Ta, or Cr); (5) a metal nitride (such as a titanium nitride or chromium nitride) coating; or (6) a metal carbide (such as titanium carbide). The wear layer is 3µm or less in thickness.
The corrosion resistant layer can be a surface treatment of either the gear itself or on the wear coating. Alternatively, the corrosion resistant layer can be under a wear coating (i.e., the corrosion resistant layer is applied to the gear and the wear coating is applied over the corrosion resistant layer). Examples of surface treatments that can provide corrosion resistance include ion implantation of nitrogen, chromium, or other metals (such as nickel). Ion implantation can be performed via plasma nitriding, plasma immersion ion implantation (PIII), or classical ion implantation procedures. If the corrosion resistant layer is to be a coating, the coating can be, for example, nickel or nickel alloys such as nickel-cobalt (NiCo), nickel boron (NiB), or nickel phosphorous (NiP) compounds applied using electrolytic or electroless (autocatalytic) processes. A nickel-zinc (NiZn) alloy (such as disclosed in US Pat. No. 5352046 and which is available from The Timken Company under the name of AquaSpexx^{®}) can also be used. Metals such as tantalum (Ta), chromium (Cr), aluminum (Al), niobium (Nb), or titanium (Ti) which can be anodized to form oxide phases can also be used. Additionally, epoxies, petroleum distillates, PMMA (poly(methyl methacrylate)), common lubricant additives, rare earth elements, or sealants (such as Loctite^{®} available from Henkel Loctite^{®} or WD40^{®}) may also work to provide corrosion resistance. Hypophosphates (HyPO₄) may also work. Further, chemical conversion layers can be applied either to the gear substrate or over the wear layer. Chromium ion implantation can be performed on wear resistant coatings such as MC/aC:H or chromium nitride to provide corrosion resistance to the steel alloy regions exposed by the pin holes in the coating.

The advantage of surface treatments (such as ion implantation by PIII, PVD, CVD, etc.) is that the surface geometry of the gear is not modified. This can be important, for example, in gear sets, where tolerances must be closely monitored and maintained. If a coating is used, the coating will preferably be about 5µm or less.

In one illustrative example, the gears can be plated with electroless nickel to provide corrosion resistance. A MC/aC:H (such as WC/aC:H) wear coating can then be applied over the electroless nickel layer. In this instance, the outer layer will provide the wear resistance and the inner layer will provide the corrosion resistance. Although the outer wear layer may have pin holes, the corrosion resistant layer which is between the wear layer and the gear (i.e., substrate) will prevent corrosive elements from reaching the gear substrate and corroding the gear. Currently at least a 20µm thick coating of electroless Ni is required to provide significant corrosion resistance as indicated by 48 hours to first visual evidence of corrosion in an ASTM B117 salt spray test. This is too thick for most applications and does not wear well. Additionally, as noted above, it fractures under loads. Our dual-component coating requires only a very thin (i.e., less than 3µm) layer of Ni since it will be covered with the MC/aC:H coating and only needs to be present in the vicinity of the pin holes in the MC/aC:H coating.

In a second illustrative example, a wear layer can be applied to the gear (i.e. substrate), and then a corrosion resistant (or sealant) layer can be applied over the wear layer. In this example, the wear layer can be a chromium nitride or a MC/aC:H or an aC:H layer and the corrosion resistant layer can be electroless nickel. Alternatively, the wear layer can include both the MC/aC:H and the aC:H components. In this variation, a metal free amorphous hydrocarbon (aC:H) would be applied over the nanocrystalline metal carbide/amorphous hydrocarbon composite layer (MC/aC:H). In this example, the sealant (corrosion resistant) layer can effectively be a sacrificial layer. When the sealant (corrosion resistant) layer is applied over the wear layer, the sealant (corrosion resistant) will fill the pin holes, as seen in FIG. 2. Because the sealant layer may not be a wear resistant layer, the sealant layer may be worn down to the level of the wear resistant layer. However, the sealant which fills the pin holes will remain in the pin holes, thereby blocking or closing the pin holes. With the pin holes blocked or closed by the sealant, corrosive elements will not be able to penetrate the wear layer, thereby affording corrosion resistance to the steel alloy substrate. With a sacrificial corrosion resistant layer, the sacrificial layer can be removed by running the gear against a dummy or soft opposing part to insure that the corrosion resistant layer is embedded (or fills) any pin holes in the wear coating. In this example, once the corrosion resistant layer is worn away, the dual-component coating will have a thickness that is approximately equal to the thickness of the wear resistant layer. Yet, the dual-component coating will provide both wear resistance and corrosion resistance.

In a third example, the gear can be coated with a chromium nitride layer which is transitioned to a Cr coating (for example, deposited by PVD processes). The outer Cr layer of the coating can then be anodized to form a Cr oxide layer. For reasons not yet understood, anodization of a coating like Cr (which contains pin holes), appears to be sufficient to provide an enhanced degree of corrosion resistance over a pure Cr layer with pin holes.

In another example, a corrosion resistant layer can be formed on the gear via PIII of Cr ions into the steel alloy surface, and a wear layer of a nanocomposite metal carbide/ amorphous hydrocarbon composite, a Si-containing amorphous hydrocarbon, and/or a metal free amorphous hydrocarbon, or Chromium nitride can be applied over treated gear surface.

In another example, an electroless-nickel layer can be applied to the gear surface and then a wear coating can be applied over the nickel layer. However, prior to applying the wear coating, the nickel layer can be bombarded with Cr, Ni or Ar ions to increase the density of the layer, and achieve a more uniform coverage of the steel alloy surface.

The method, as outlined above, proposes two methods for providing both corrosion resistance and wear protection to a steel alloy substrate (such as a steel alloy gear). In the first system, the corrosion resistant layer is beneath the wear layer. Here, the corrosion resistance layer can include a thin (i.e., less than 3µm) layer of Ni applied via a solution-based process or Cr implantation applied via ion implantation or PIII. The wear resistant layer can comprise: (1) a thin (i.e., less than 3µm) layer of MC/aC:H applied, for example, via reactive magnetron sputtering; (2) a thin (i.e., less than 3µm) layer of Chromium nitride applied, for example, via reactive magnetron sputtering; (3) a thin (i.e., less than 3µm) layer of Si-aC:H applied, for example, via plasma enhanced CVD; (4) a thin (i.e., less than about 3µm) bi-layer of MC/aC:H and aC:H applied, for example, via reactive magnetron sputtering and CVD; or (5) a thin (i.e., less than 3µm) layer of B₄C applied, for example, via magnetron sputtering.

In the second method, the wear resistance layer underlies the corrosion resistance layer. Here, the corrosion resistance layer acts as a sealant, filling the pinholes or cracks in the wear resistant layer. In this method, the wear resistant layer can be the same as just noted above. The corrosion resistant layer can comprise electroless Ni, epoxy resins, lubricant additives, polymer sealants, and AquaSpexx^{®}.

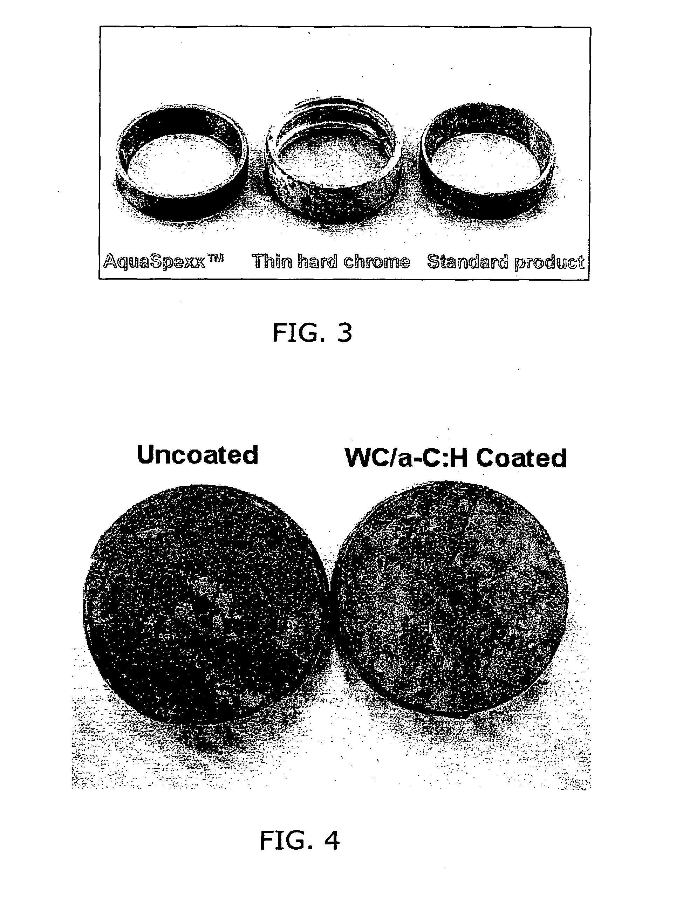

FIG. 3 shows three rings, one coated with a NiZn, one coated with hard chrome, and one uncoated. AquaSpexx^{®}, which is available from The Timken Company, was used for the NiZn coating. FIG. 3 illustrates the effectiveness of the Ni-based corrosion resistant coating as compared to the chrome plating or uncoated cases. After 24 hrs of ASTM B117 salt spray corrosion testing, no rust was present on the AquaSpexx-coated ring (the AquaSpexx coating has a natural "rainbow" green-yellow hue appearance), while red rust is clearly observed on the chrome-coated and standard rings.
In FIG. 4 shows the effect of salt-spray corrosion testing on a steel-alloy coupon coated with a WC/a-C:H coating and an uncoated coupon The WC/a-C:H coating used was ES300, available from The Timken Company. As seen in FIG. 4, the ES300 coated coupon and the uncoated coupon both had a significant amount of rusting. The images of FIG. 4 demonstrate that the wear resistant layer does not protect the alloy against corrosion. That is, the wear resistant layer is not a corrosion resistant layer. The corrosion resistance is supplied by the second component of the coating - the Ni layer which will form a layer over the substrate (either on top of, or beneath the wear resistant layer) which is much more impervious the corrosion. As noted above, if the corrosion resistant layer is applied over the wear resistant layer, the coating resistant layer can be worn down, such that the over-all coating has a thickness substantially equal to the thickness of the wear resistant layer. Yet, the pin holes in the wear resistant layer will be filled, blocked, or plugged by the corrosion resistant nickel.

As various changes could be made in the above constructions without departing from the scope of the invention, it is intended that all matter contained in the above description or shown in the accompanying drawings shall be interpreted as illustrative and not in a limiting sense.

## Claims

1. A method for providing both wear protection and corrosion resistance to a gear having a metallic surface, the method comprising:
depositing a thin film wear protection layer on the surface; the wear protection layer being less than 3 micrometers and being deposited by a method that will leave cracks and/or holes in the wear protection layer which can be penetrated by corrosive elements; and
depositing a corrosion resistant layer over the wear protection layer; the material of the corrosion resistant layer filling the cracks and/or holes in the wear protection layer to prevent corrosive elements from reaching the surface.

2. The method of claim 1 wherein the corrosion resistant layer is a sacrificial layer, the method further comprising a step of wearing down the corrosion resistant layer thereby removing the corrosion resistant layer from the wear layer, except for where the corrosion resistant layer fills the cracks and/or holes.

3. The method of claim 1 wherein the wear layer comprises a coating chosen from the group consisting of nanocrystalline metal carbide/amorphous hydrocarbon composites, metal-free amorphous hydrocarbon, silicon-containing amorphous hydrocarbon, boron carbides, metal nitrides, and combinations thereof.

4. The method of claim 1 wherein the corrosion resistant layer comprises polymers, anodized metals, lubricant additive films and their derivatives and combinations thereof.

5. The method of claim 1 wherein the corrosion resistant layer comprises nickel alloys containing P, B, Co, W, Th, Zn and combinations thereof.

6. A gear having a metallic surface, the surface comprising a wear layer on said gear surface and a corrosion resistant material; said wear layer being less than 3 micrometers and having cracks and/or holes therein through which corrosive elements could pass; said corrosion resistant material filling the cracks and/or holes in the wear protective layer to substantially prevent corrosive materials from reaching the gear surface.

7. The gear of claim 6 wherein the wear layer comprises a coating chosen from the group consisting of nanocrystalline metal carbide/amorphous hydrocarbon composites, metal-free amorphous hydrocarbon, silicon-containing amorphous hydrocarbon, boron carbides, metal nitrides, and combinations thereof.

8. The gear of claim 6 wherein the corrosion resistant material comprises polymers, anodized metals, lubricant additive films and their derivatives and combinations thereof.

9. The gear of claim 6 wherein the corrosion resistant material comprises nickel alloys containing P, B, Co, W, Th, Zn and combinations thereof.

10. The gear of claim 8 wherein the polymers are PMMA or PTFE.

11. The gear of claim 8 wherein the derivatives of the corrosion resistant material comprise chemical conversion layers.

## Patentansprüche

1. Verfahren zum Verschleiß- und Korrosionsschutz eines Zahnrads mit einer metallischen Oberfläche, umfassend:
- Beschichten der Oberfläche mit einer dünnen Schicht Verschleißschutz; wobei die Verschleißschutzschicht kleiner als 3 Mikrometer ist und mittels eines Verfahrens aufgebracht ist, das Risse und/oder Löcher in der Verschleißschutzschicht hinterlässt, die von korrodierenden Elementen durchdrungen werden können; und
- Aufbringen einer korrosionsresistenten Schicht auf die Verschleißschutzschicht, wobei das Material der korrosionsresistenten Schicht die Risse und/oder Löcher in der Verschleißschutzschicht füllt, um zu verhindern, dass korrosive Elemente die Oberfläche erreichen.

2. Verfahren nach Anspruch 1, bei dem die korrosionsresistente Schicht eine Opferschicht ist, wobei das Verfahren weiterhin den Schritt umfasst, dass die korrosionsresistente Schicht abgetragen wird, wodurch die korrosionsresistente Schicht von der Verschleißschutzschicht entfernt wird, außer dort, wo die korrosionsresistente Schicht die Risse und/oder Löcher füllt.

3. Verfahren nach Anspruch 1, bei dem die Verschleißschutzschicht eine Beschichtung gewählt aus der Gruppe bestehend aus nanokristallinem Metallkarbid/amorphem Kohlenwasserstoff-Komposit, metallfreiem amorphem Kohlenwasserstoff. Silizium-enthaltendem amorphem Kohlenwasserstoff, Borkarbiden, Metallnitriden und Kombinationen daraus aufweist.

4. Verfahren nach Anspruch 1, bei dem die korrosionsresistente Schicht Polymere, anodisierte Metalle, Schmierstoffadditivfilme und Derivate und Kombination davon umfasst.

5. Verfahren nach Anspruch 1, bei dem die korrosionsresistente Schicht Nickellegierungen mit P, B, Co, W, Th, Zn und Kombinationen davon umfasst.

6. Zahnrad mit metallischer Oberfläche, die eine Verschleißschutzschicht auf der Zahnradoberfläche und ein korrosionsresistentes Material umfasst, wobei die Verschleißschutzschicht weniger als 3 Mikrometer beträgt und Risse und/oder Löcher aufweist, durch die korrodierende Elemente hindurchtreten könnten; wobei das korrosionsresistente Material die Risse und/oder Löcher in der Verschleißschutzschicht füllt, um ein Erreichen der Zahnradoberfläche durch korrodierende Materialien wesentlich zu verhindern.

7. Zahnrad nach Anspruch 6, bei dem die Verschleißschutzschicht eine Beschichtung gewählt aus der Gruppe bestehend aus nanokristallinem Metallkarbid/amorphem Kohlenwasserstoff-Komposit, metallfreiem amorphem Kohlenwasserstoff, Silizium-enthaltendem amorphem Kohlenwasserstoff, Borkarbiden, Metallnitriden und Kombinationen daraus aufweist.

8. Zahnrad nach Anspruch 6, bei dem die korrosionsresistente Schicht Polymere, anodisierte Metalle, Schmierstoffadditivfilme und Derivate und Kombination davon umfasst.

9. Zahnrad nach Anspruch 6, bei dem die korrosionsresistente Schicht Nickellegierungen mit P, B, Co, W, Th, Zn und Kombinationen davon umfasst.

10. Zahnrad nach Anspruch 8, bei dem die Polymere PMMA oder PTFE sind.

11. Zahnrad nach Anspruch 8, bei dem die Derivate des korrosionsresistenten Materials chemische Umwandlungsschichten umfassen.

## Revendications

1. Procédé pour conférer à la fois une protection contre l'usure et une résistance à la corrosion à un engrenage ayant une surface métallique, le procédé comprenant
le dépôt d'une couche de protection contre l'usure en film mince sur la surface ; la couche de protection contre l'usure étant inférieure à 3 micromètres et étant déposée par un procédé qui laissera des fissures et/ou des trous dans la couche de protection contre l'usure qui peuvent être pénétrés par des éléments corrosifs ; et
le dépôt d'une couche résistante à la corrosion par-dessus la couche de protection contre l'usure, le matériau de la couche résistante à la corrosion remplissant les fissures et/ou les trous dans la couche de protection contre l'usure pour empêcher les éléments corrosifs d'atteindre la surface.

2. Procédé selon la revendication 1, dans lequel la couche résistante à la corrosion est une couche sacrificielle, le procédé comprenant en outre une étape d'usure de la couche résistante à la corrosion, éliminant ainsi la couche résistante à la corrosion de la couche d'usure, à l'exception des emplacements où la couche résistante à la corrosion remplit les fissures et/ou les trous.

3. Procédé selon la revendication 1, dans lequel la couche d'usure comprend un revêtement choisi dans le groupe constitué par des composites carbure de métal nanocristallin/hydrocarbure amorphe, un hydrocarbure amorphe sans métal, un hydrocarbure amorphe contenant du silicium, des carbures de bore, des nitrures de métal, et leurs combinaisons.

4. Procédé selon la revendication 1, dans lequel la couche résistante à la corrosion comprend des polymères, des métaux anodisés, des films d'additif lubrifiantes et leurs dérivés et combinaisons.

5. Procédé selon la revendication 1, dans lequel la couche résistante à la corrosion comprend des alliages de nickel contenant P, B, Co, W, Th, Zn et leurs combinaisons.

6. Engrenage ayant une surface métallique, la surface comprenant une couche d'usure sur ladite surface d'engrenage et un matériau résistant à la corrosion ; ladite couche d'usure étant inférieure à 3 micromètres et comportant des fissures et/ou des trous à l'intérieur à travers lesquels des éléments corrosifs pourraient passer; ledit matériau résistant à la corrosion remplissant les fissures et/ou les trous dans la couche de protection contre l'usure pour empêcher sensiblement les matériaux corrosifs d'atteindre la surface d'engrenage.

7. Engrenage selon la revendication 6, dans lequel la couche d'usure comprend un revêtement choisi dans le groupe constitué par des composites carbure de métal nanocristallin/hydrocarbure amorphe, un hydrocarbure amorphe sans métal, un hydrocarbure amorphe contenant du silicium, des carbures de bore, des nitrures de métal, et leurs combinaisons.

8. Engrenage selon la revendication 6, dans lequel le matériau résistant à la corrosion comprend des polymères, des métaux anodisés, des films d'additif lubrifiants et leurs dérivés et combinaisons.

9. Engrenage selon la revendication 6, dans lequel le matériau résistant à la corrosion comprend des alliages de nickel contenant P, B, Co, W, Th, Zn et leurs combinaisons.

10. Engrenage selon la revendication 8, dans lequel les polymères sont le PMMA ou le PTFE.

11. Engrenage selon la revendication 8, dans lequel les dérivés du matériau résistant à la corrosion comprennent des couches de conversion chimique.
